# EUROPEAN PATENT APPLICATION

(11) **EP 2 937 806 A1**
(43) Date of publication of application: **28.10.2015**
(21) Application number: 14290116.4
(22) Date of filing: 22.04.2014
(51) Int. Cl.: G06F 21/42, G06F 21/44

(54) **Method and system for securing electronic data exchange between an industrial programmable device and a portable programmable device**

(71) Applicant: ALSTOM Renewable Technologies, 38100 Grenoble (FR)
(72) Inventor: Poete, Stephane, 23730 Histun (FR)
(74) Representative: Alstom Technology Ltd

(57) **Abstract**

The invention concerns a method and device for securing electronic data exchange between an industrial programmable device (2) implementing industrial process control and a portable programmable device (4), said portable programmable device (4) being adapted to be operated by a user and to exchange electronic data with said industrial programmable device (2) via a first communication protocol, each of said industrial programmable device and portable programmable device comprising a communication module (6, 30) enabling said first communication protocol. The method comprises, on each of the devices (2, 4), reading a user identifier, disabling the communication modules of said devices if the user identifier is not recognized in a locally memorized set of authorized users, and verifying whether a first user identifier read on the industrial programmable device (2) and a second user identifier read on the portable programmable device (4) are identical, and in case of negative verification, disabling the communication module (6) of the industrial programmable device (2) and/or disabling the communication module (30) of the portable programmable device (4).

## Description

The present invention concerns a method and system for securing electronic data exchange between an industrial programmable device implementing industrial process control and a portable programmable device.

The invention finds applications in the field of control and maintenance of industrial sites, enabling an authorized user to securely access and use information provided by process control applications, provided by an industrial programmable device, such as a programmable logic controller (PLC) or a computer server.

Such industrial programmable devices are equipped with a communication module for communicating with an external device equipped with a user interface, the external device being adapted to be operated by a user and to exchange electronic data for industrial process control. An example of such an external device is a portable programmable device, such as a portable PC or a tablet computer.

In general, such a portable programmable device is able to exchange electronic data with the industrial programmable device using hardware for communication installed at production and software installed, for example, by the company providing the industrial process control software installed on the industrial programmable device.

Most industrial applications are likely to exchange confidential data relating to the industrial process, so there is a need to protect such electronic data exchanged.

It is an aim of the present invention to provide a method and system for securing electronic data exchange for such applications, preventing in particular eavesdropping on the communication channel between the industrial programmable device and the portable programmable device.

To this end, the invention proposes a method for securing electronic data exchange between an industrial programmable device implementing industrial process control and a portable programmable device, the portable programmable device being adapted to be operated by a user and to exchange electronic data with said industrial programmable device via a first communication protocol, each of said industrial programmable device and portable programmable device comprising a communication module enabling said first communication protocol.

The method comprises the following steps:
- on the industrial programmable device,
- reading a first user identifier using a user identification device, and
- checking whether said first user identifier belongs to a set of user identifiers previously stored in a memory of said industrial programmable device,
- in case of negative checking, disabling the communication module of said industrial programmable device,
- on the portable programmable device,
- reading a second user identifier using a user identification device, and
- checking whether said second user identifier belongs to a list of user identifiers previously stored in a memory of said portable programmable device,
- in case of negative checking, disabling the communication module of said portable programmable device.

The method further comprises a step of verifying whether said first user identifier is identical to said second user identifier, and in case of negative verification, the method comprises disabling the communication module of said industrial programmable device and/or disabling the communication module of said portable programmable device.

Advantageously, the invention provides a method which disables the respective communication modules of the industrial programmable device and of the portable programmable device, unless a same user identifier is read by a user identification device by both programmable devices.

According to particular features, taken independently or in combination, the method comprises features according to the dependent claims.

According to a particular feature, the method further comprises:
- obtaining, on said portable programmable device, a private key for authentication, belonging to a pair of cryptographic keys, said authentication private key being locally memorized in association with said second user identifier;
- encrypting the second user identifier with the authentication private key (K1_priv) and transmitting an item of information containing the encrypted second user identifier to the industrial programmable device;
- receiving, on said industrial programmable device, the item of information containing the encrypted second user identifier, and decrypting said item of information using an authentication public key memorized in the industrial portable device in association with said first user identifier to obtain a decrypted second user identifier, and
- comparing the decrypted second user identifier with the first user identifier.

According to a particular feature, the reading of a first user identifier comprises physically connecting a user identification card to the industrial programmable device, and/or the reading of a second user identifier comprises physically connecting the user identification card to the portable programmable device.

According to a particular feature, the reading of a first user identifier comprises a communication of said first user identifier to the industrial programmable device via a second communication protocol, and/or the reading a second user identifier comprises a communication of said second user identifier to the portable programmable device via a second communication protocol, said second communication protocol being different from the first communication protocol.

According to a particular feature, the method further comprises, after verifying that first user identifier is identical to said second user identifier, establishing an encrypted communication channel between the industrial programmable device and the portable programmable device comprising:
- obtaining, on the industrial programmable device, a pair of exchange encryption keys comprising an exchange public key and an exchange private key associated with the first user identifier,
- encrypting the exchange public key with the authentication public key associated with the first user identifier, and
- sending the encrypted exchange public key to the portable programmable device.

According to a particular feature, the obtaining of a pair of exchange encryption keys comprises applying a pseudo-random re-shuffling of a second list of key pairs stored on the industrial programmable device.

According to a particular feature, the method further comprises receiving, on the portable programmable device, the encrypted exchange public key and obtaining the exchange public key by applying decryption using the authentication private key locally stored.

According to a particular feature, the method further comprises exchanging data encrypted with the pair of exchange encryption keys during a predetermined lapse of time.

According to a particular feature, the method further comprises, after said predetermined time lapse, the steps of:
- obtaining, on the industrial programmable device, a new pair of exchange encryption keys comprising a new exchange public key and a new exchange private key associated with the first user identifier,
- repeating the steps of encrypting and sending on the industrial programmable device, using the new exchange public key as exchange public key, and
- repeating the steps of receiving and obtaining an exchange public key on the portable programmable device.

According to a particular feature, the method further comprises exchanging data encrypted with the new pair of exchange encryption keys during the predetermined lapse of time.

According to a particular feature, the first communication protocol is a wireless communication protocol.

According to another aspect, the invention concerns a system for for securing electronic data exchange, comprising an industrial programmable device implementing industrial process control and a portable programmable device, said portable programmable device being adapted to be operated by a user and to exchange electronic data with said industrial programmable device via a first communication protocol, each of said industrial programmable device and portable programmable device comprising a communication module enabling said first communication protocol.

The system is characterized in that it:
- the industrial programmable device is adapted to :
   - read a first user identifier from a user identification device, and
   - check whether said first user identifier belongs to a list of user identifiers previously stored in a memory of said industrial programmable device,
   - in case of negative checking, maintain the communication module of said industrial programmable device disabled,
   - the portable programmable device is adapted to :
      - read a second user identifier from a user identification device, and
      - check whether said second user identifier belongs to a list of user identifiers previously stored in a memory of said portable programmable device,
      - in case of negative checking, maintain the communication module of said portable programmable device disabled,
the industrial programmable device further comprising a module adapted to verify whether said first user identifier is identical to said second user identifier, and in case of negative verification, to disable the communication module of said industrial programmable device and/or to disable the communication module of said portable programmable device.

According to a particular feature, said industrial programmable device comprises an integrated user identification reader adapted to receive a user identification card and/or said portable programmable device comprises an integrated user identification reader adapted to receive a user identification card.

According to a particular feature, said industrial programmable device comprises a second communication module adapted to communicate with an external user identification device via a second communication protocol, and/or said portable programmable device comprises a second communication module adapted to communicate with an external user identifier reading device via a second communication protocol, the second communication protocol being different from the first communication protocol.The invention will be better understood in the light of the detailed description and accompanying drawings listed below, which are only exemplary and by no way limiting:
- Figure 1 represents schematically a system for securing electronic data exchange according to an embodiment of the invention;
- Figure 2 is a flowchart of a first part of method for securing electronic data exchange according to an embodiment of the invention;
- Figure 3 is a flowchart of a second part of method for securing electronic data exchange according to an embodiment of the invention.

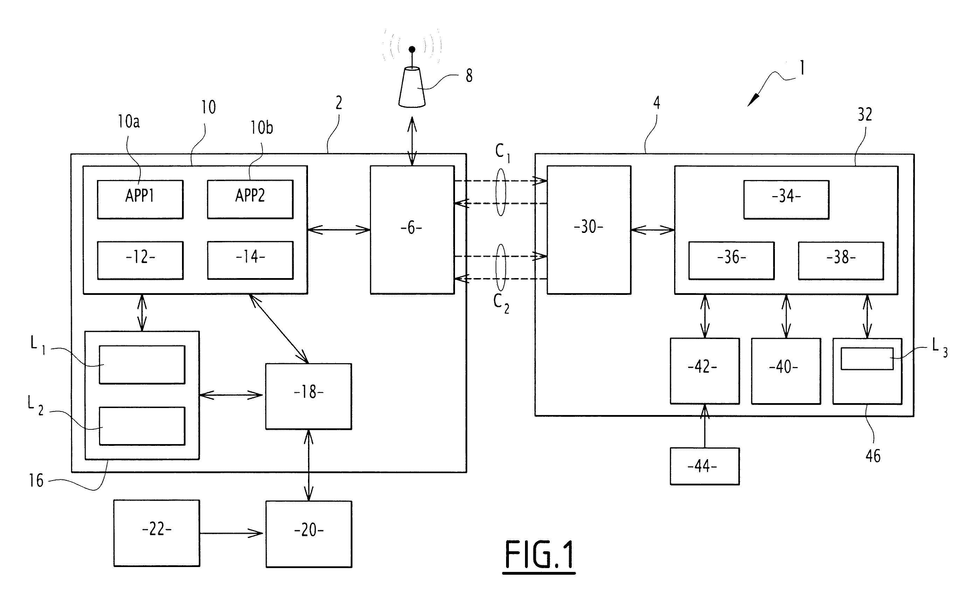

Figure 1 represents schematically a system 1 for securing electronic data exchange according to an embodiment of the invention.

System 1 comprises an industrial programmable device 2, such as a PLC for example, and a portable programmable device 4.

The industrial programmable device 2 comprises a communication module 6, enabling a first communication protocol with the portable programmable device 4.

The communication module 6 comprises hardware elements and software elements.

In an embodiment, the first communication standard is a wireless standard, for example WiFi standard, and the communication module 6 comprises means for connecting by wireless communication to a WiFi antenna 8.

Alternatively, the first communication standard can any wireless communication used for mobile phone, such as GPRS, 3G, ...

The industrial programmable device 2 also comprises a processing unit 10, adapted to implement code instructions using one or several processors.

In the example, the processing unit 10 comprises two industrial process control applications APP1, APP2, a user authentication module 12 and an electronic data exchange module 14.

The two industrial process control applications APP1, APP2 are adapted to communicate with industrial automates (not represented) in a known manner, so they are not described in any further detail hereafter.

It is to be understood that two industrial process control applications are illustrated, but the invention applies with any number of process control applications or more generally, any control-command system implemented by the industrial programmable device 2.

Further, the industrial programmable device 2 comprises a memory 16, used for storing data and code instructions for implementing a method according to the invention.

The memory 16 stores a first association list L1, comprising a set of user identifiers {UiD_{_i}} for identifying authorized users of the industrial process control applications APP1, APP2, each user identifier UID_{_i} of the first list L1 being associated to an authentication public key K_{1_pub-i} of a cryptographic key pair {K_{1_pub-1},K_{1_priv-1}}, called hereafter authentication key pair.

The authentication key pair is a cryptographic key pair used with a known cryptographic scheme, for example RSA, for creating a first secure communication channel C1 of encrypted digital data.

The memory 16 further stores a second association list L2, comprising an association between each user identifier UID_{_i} and a different cryptographic key pair, called hereafter exchange key pair {K_{2_pub-i},K_{2_priv-i}}.

The exchange key pair is a cryptographic key pair used with a known cryptographic scheme, for example RSA, for creating a second secure communication channel C2 of encrypted digital data.

The first and second associations lists are used {UID_{_i}} in the method for securing electronic data exchange as explained in detail hereafter.

In an alternative embodiment, a list of user identifiers of authorized users is stored in a first list, and the authentication and exchange keys are stored separately, while an association between the user identifiers of the first list and each of the authentication and exchange keys is maintained.

In an alternative embodiment, the first association list L1 comprises a list of authentication key pairs { K_{1_pub-i},K_{1_priv-i}} in association with corresponding authorized user identifiers.

The industrial programmable device 2 further comprises a second communication module 18, adapted to communicate with an external user identification device 20 according to a second communication protocol, different from the first communication protocol.

In an embodiment, the second communication protocol is a proximity radio communication protocol and the external user identification device 20 is an NFC (Near Field Communication) reader, adapted to read a first user identifier stored in a chip card 22.

Alternatively, RFID technology or other proximity radio communication system is used, such as NFC technology or barcode scanners.

Advantageously, the chip card 22 is a user identifier card, and the reading of a first user identifier stored in the user identifier card implies physical proximity of the card holder to the industrial programmable device 2.

In an alternative embodiment, the user identification device 20 for reading the first user identifier is integrated within the industrial programmable device 2.

According to the invention, the industrial programmable device is adapted to communicate, using the first communication protocol, with the portable programmable device via two secure channels C1, C2, the data transmitted being encrypted using an asymmetric cryptographic scheme.

The portable programmable device 4 comprises a communication module 30 enabling said first communication protocol.

The portable programmable device 4 further comprises a processing unit 32, adapted to implement processing modules which execute code instructions using one or several processors.

In the example, the processing unit 32 comprises a client application 34 adapted to receive electronic data from and to send requests to the two industrial process control applications APP1, APP2.

Further, the processing unit 32 implements a user authentication module 36 and an electronic data exchange module 38.

The portable programmable device 4 also comprises a user interface 40, for example a tactile screen, which is adapted to display information to the user and to receive interactive commands. A user can therefore interact with the system, in particular in order to operate the industrial process control applications for monitoring an industrial installation.

In the embodiment illustrated in figure 1, the portable programmable device 4 includes a user identification device 42 adapted to read information from a user identification card 44, which is for example a chip card, in particular a second user identifier. When a same authorized user identifies with the system, the two user identification cards 22, 44 are in fact a single card carrying a given user identifier.

Further, the portable programmable device 4 comprises a memory 46, used for storing data and code instructions for implementing a method according to the invention.

The memory 46 stores a third association list L3, comprising a set of user identifiers {UID_{_i}} for identifying authorized users of the industrial process control applications APP1, APP2 via the portable programmable device 4, each user identifier UID_{_i} of the third list L3 being associated to an authentication private key K_{1_priv-i} of an authentication key pair {K_{1_pub-i},K_{1_priv-i}}.

The exact same set of user identifiers is stored in the first association list L1 on the industrial programmable device 2 and in the third association list L3 on the portable programmable device 4. These association lists are stored in the respective memories 16, 46 previously to the electronic data exchange. These association lists define the authorized users.

The creation and update of the lists is managed by an external tool. This tool is configured with the list of authorized UIDs, and it generates the L1, L2 and L3 lists. The use of the tool, as well as the distribution of the L1, L2 and L3 lists is restricted to identified and trusted users.

According to the invention, the electronic data exchanged on the first secure channel C1 is encrypted using the authentication key pair { K_{1_pub-i},K_{1_priv-i}} for an authorized user identified at both devices independently with a same user identifier UID_{_i}.

In the absence of successful identification of a same authorized user at both devices 2 and 4, the respective communication modules 6 and 30 are disabled.

Further to a successful authentication, the electronic data exchanged on the second secure channel C2, which is electronic data relative to the industrial process control, is encrypted using the exchange key pair { K_{2_pub-i},K_{2_priv-i}} associated to the authorized user identified by user identifier UID_{_i}.

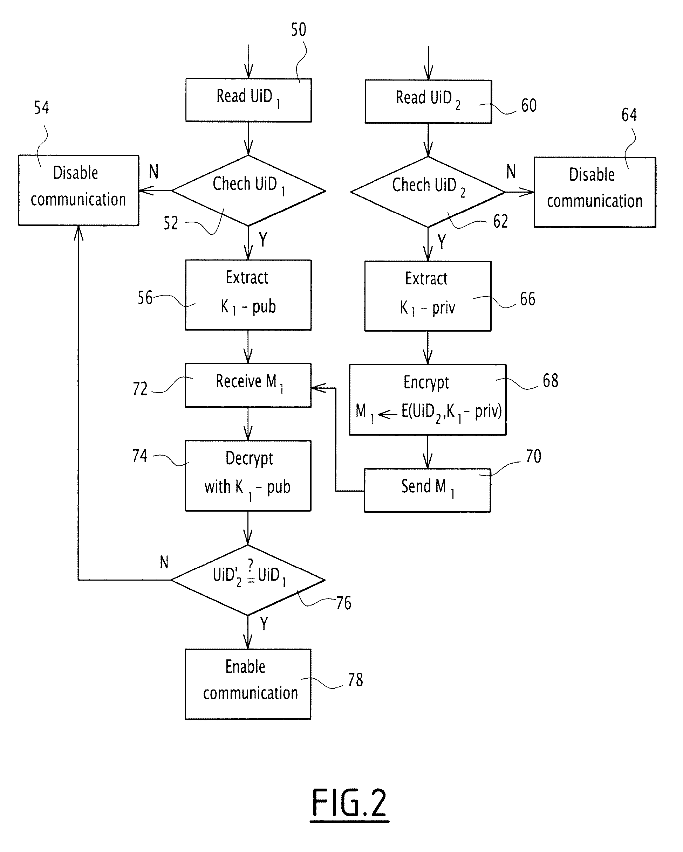

Figure 2 is a flowchart illustrating the main steps of a first part of a method for securing electronic data exchange between an industrial programmable device 2 and a portable programmable device 4 according to an embodiment of the invention.

This first part concerns authorized user identification on both devices and is implemented by respective modules 12 and 36.

On the industrial programmable device 2, a first user identifier UID₁ is read in a user identifier reading step 50.

It is then checked in checking step 52 whether the first user identifier UID₁ read belongs to the set of authorized user identifiers stored in memory. Taking the example of figure 1, step 52 checks for example whether UID₁ belongs to the first list L1.

In case of negative answer, so if the first user identifier UID₁ read does not belong to the set of memorized user identifiers, then checking step 52 is followed by step 54 of disabling the communication module 6 of the industrial programmable device 2.

In an embodiment, the communication module 6 is disabled by default, so step 54 simply maintains the communication disabled.

In case of positive checking at step 52, the communication module 6 is enabled or maintained enabled, so that the industrial programmable device 2 may receive data from the portable programmable device 4 using the first communication protocol.

The authentication public key K1_pub is extracted from the memory in step 56, in association with the first user identifier UID₁. Taking the example of figure 1, the authentication public key stored in the first association list, in association with the first user identifier UID₁, is obtained.

Sensibly in parallel or within a short lapse of time, either before or after the processing on the industrial programmable device, a second user identifier UID₂ is read on the portable programmable device in a user identifier reading step 60.

It is then checked in checking step 62 whether the second user identifier UID₂ read belongs to the set of authorized user identifiers stored in memory of the portable programmable device 4. Taking the example of figure 1, step 62 checks for example whether UID₂ belongs to the third list L3.

In case of negative answer, so if the second user identifier UID₂ read does not belong to the set of memorized user identifiers, then checking step 62 is followed by step 64 of disabling the communication module 30 of the portable programmable device 4.

In an embodiment, the communication module 30 is disabled by default, so step 64 simply maintains the communication disabled.

In case of positive checking at step 62, the communication module 30 is enabled or maintained enabled, so that the portable programmable device 4 may exchange data with the industrial programmable device 2 using the first communication protocol.

The authentication private key K1_priv is extracted from the memory in step 66, in association with the second user identifier UID₂. Taking the example of figure 1, the authentication private key stored in the third association list L3, in association with the second user identifier UID₂, is obtained.

Next, in an encryption step 68, the second user identifier UID₂ is encrypted with the authentication private key K1_priv, and an encrypted data item M1 is obtained.

The encrypted data item M1 is sent to the industrial programmable device in a sending step 70.

The industrial programmable device 2 receives the encrypted data item M1 in a receiving step 72, and decrypts the received encrypted data item M1 with the locally extracted authentication public key K1_pub in decryption step 74.

The decryption results in the extraction of a decrypted second user identifier UID₂'.

The authentication module 12 of the industrial programmable device 2 then verifies in step 76 whether the decrypted second user identifier UID₂' is identical to the first user identifier UID₁.

In case of positive verification, the fact that a same authorized user card was read on both devices is established, and verification step 76 is followed by a step 78 of enabling the communication with the portable programmable device.

Optionally, a confirmation of communication enablement is also sent to the portable communication device during step 78.

In case of negative verification, verification step 76 is followed by the step of disabling communication 54 previously described.

Optionally, a message is also sent to the portable communication device in order to require communication disablement.

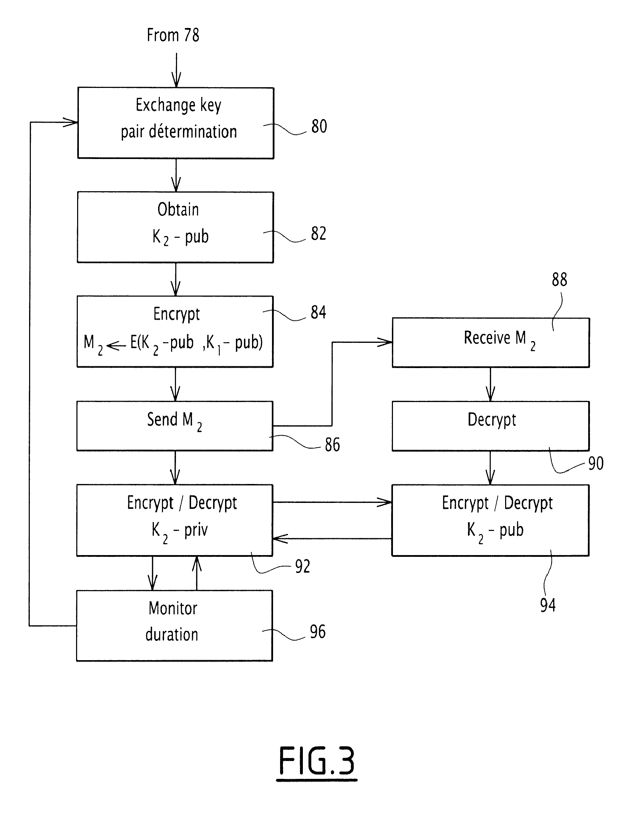

Figure 3 is a flowchart illustrating the main steps of a second part of a method for securing electronic data exchange between an industrial programmable device and a portable programmable device according to an embodiment of the invention.

This second part concerns the exchange of data relative to the industrial process after positive identification of an authorized user on both devices and is implemented by respective modules 14 and 38.

In a exchange key pair initialization step 80, which follows step 78 on the industrial programmable device 2, an exchange key pair {K2_pub, K2_priv} associated to the first user identifier UID₁ is dynamically generated.

In an embodiment, a second list L2 of keys pairs is stored in memory, and the list is re-shuffled in a pseudo-random manner. A time counter for monitoring a session duration is also initialized to 0.

The exchange public key K2_pub associated with the first user identifier UID₁ is extracted in step 82, and then encrypted with the authentication public key K1_pub, which is already known by the portable programmable device 4, during encryption step 84.

An encrypted data item M2 results from encryption step 84 and is sent to the portable programmable device in sending step 86.

The encrypted data item M2 is received by the portable programmable device 4 in the receiving step 88, and then decrypted in decryption step 90 with the authentication private key K1_priv associated with the second user identifier UID₂.

The exchange public key K2_pub is extracted from the decrypted data item and stored for the exchange of encrypted electronic data with the industrial programmable device 2.

The exchange key pair K2_priv, K2_pub is used for the exchange of electronic data 92, 94, between the industrial programmable device 2 and the portable programmable device 4 during a communication session, using the second secure communication channel C2.

The duration of the communication session is monitored (step 96) using a watchdog mechanism, and if the duration exceeds a predetermined time lapse T, for example T=30 minutes, then the communication is temporarily stopped, and the step 80 of exchange key pair initialization is carried out again, followed by steps 82 to 90 already described.

Therefore, the exchange key pair used for the encrypted communications is dynamically changed, so as to avoid possible attacks of storage and analysis of the exchanged data, since a too long use of a same key pair may allow an eavesdropper to extract information about the key pair used.

Advantageously, the method of the invention ensures the security of the exchanges of electronic data since the data transmitted are encrypted and since none of the encryption keys is ever transmitted in the clear (without encryption) between the two devices.

The dynamic update of the key pair used for encrypting the data exchange further improves the security of the communications.

## Claims

1. Method for securing electronic data exchange between an industrial programmable device (2) implementing industrial process control and a portable programmable device (4), said portable programmable device (4) being adapted to be operated by a user and to exchange electronic data with said industrial programmable device (2) via a first communication protocol, each of said industrial programmable device and portable programmable device comprising a communication module (6, 30) enabling said first communication protocol,
**characterized in that** it comprises the following steps:
- on the industrial programmable device (2),
- reading (50) a first user identifier (UID₁) using a user identification device (20, 22), and
- checking (52) whether said first user identifier (UID₁) belongs to a set of user identifiers previously stored in a memory of said industrial programmable device (2),
- in case of negative checking, disabling (54) the communication module (6) of said industrial programmable device (2),
- on the portable programmable device (4),
- reading (60) a second user identifier (UID₂) using a user identification device (42, 44), and
- checking (62) whether said second user identifier (UID₂) belongs to a list of user identifiers previously stored in a memory of said portable programmable device (4),
- in case of negative checking, disabling (64) the communication module (30) of said portable programmable device (4),
the method further comprising a step of verifying (76) whether said first user identifier (UID₁) is identical to said second user identifier (UID₂), and in case of negative verification, disabling (54) the communication module (6) of said industrial programmable device (2) and/or disabling (64) the communication module (30) of said portable programmable device (4).

2. Method for securing electronic data exchange according to claim 1, further comprising:
- obtaining (66), on said portable programmable device (4), a private key for authentication (K1_priv), belonging to a pair of cryptographic keys, said authentication private key (K1_priv) being locally memorized in association with said second user identifier (UID₂);
- encrypting (68) the second user identifier (UID₂) with the authentication private key (K1_priv) and transmitting (70) an item of information containing the encrypted second user identifier to the industrial programmable device (2);
- receiving (72), on said industrial programmable device (2), the item of information containing the encrypted second user identifier, and decrypting (74) said item of information using an authentication public key (K1_pub) memorized in the industrial portable device (2) in association with said first user identifier (UID₁) to obtain a decrypted second user identifier, and
- comparing (76) the decrypted second user identifier with the first user identifier.

3. Method for securing electronic data exchange according to any of claims 1 or 2, wherein reading a first user identifier comprises physically connecting a user identification card to the industrial programmable device (2), and/or wherein reading a second user identifier comprises physically connecting the user identification card to the portable programmable device (4).

4. Method for securing electronic data exchange according to any of claims 1 or 2, wherein reading (50) a first user identifier comprises a communication of said first user identifier to the industrial programmable device (2) via a second communication protocol, and/or reading (60) a second user identifier comprises a communication of said second user identifier to the portable programmable device (4) via a second communication protocol,
said second communication protocol being different from the first communication protocol.

5. Method for securing electronic data exchange according to any of claims 1 to 4, further comprising, after verifying (76) that first user identifier is identical to said second user identifier, establishing an encrypted communication channel between the industrial programmable device (2) and the portable programmable device (4) comprising:
- obtaining (80), on the industrial programmable device (2), a pair of exchange encryption keys comprising an exchange public key (K2_pub) and an exchange private key (K2_priv) associated with the first user identifier (UID₁),
- encrypting (84) the exchange public key (K2_pub) with the authentication public key (K1_pub) associated with the first user identifier (UID₁), and
- sending (86) the encrypted exchange public key to the portable programmable device (4).

6. Method for securing electronic data exchange according to claim 5, wherein the obtaining (80) of a pair of exchange encryption keys comprises applying a pseudo-random re-shuffling of a second list of key pairs stored on the industrial programmable device.

7. Method for securing electronic data exchange according to any of claims 5 or 6, further comprising:
- receiving (88), on the portable programmable device (4), the encrypted exchange public key and obtaining (90) the exchange public key (K2_pub) by applying decryption using the authentication private key (K1_priv) locally stored.

8. Method for securing electronic data exchange according to any of claims 5 to 7, further comprising exchanging (92, 94) data encrypted with the pair of exchange encryption keys during a predetermined lapse of time.

9. Method for securing electronic data exchange according to claim 8, further comprising, after said predetermined time lapse, the steps of :
- obtaining (80), on the industrial programmable device (2), a new pair of exchange encryption keys comprising a new exchange public key and a new exchange private key associated with the first user identifier,
- repeating the steps of encrypting (84) and sending (86) on the industrial programmable device (2), using the new exchange public key as exchange public key (K2_pub), and
- repeating the steps of receiving (88) and obtaining (90) an exchange public key on the portable programmable device (4).

10. Method for securing electronic data exchange according to claim 9, further comprising exchanging (92, 94) data encrypted with the new pair of exchange encryption keys during the predetermined lapse of time.

11. Method for securing electronic data exchange according to any of claims 1 to 10, wherein said first communication protocol is a wireless communication protocol.

12. System for securing electronic data exchange, comprising an industrial programmable device (2) implementing industrial process control and a portable programmable device (4), said portable programmable device (4) being adapted to be operated by a user and to exchange electronic data with said industrial programmable device (2) via a first communication protocol, each of said industrial programmable device (2) and portable programmable device (4) comprising a communication module enabling said first communication protocol,
**characterized in that** it:
- the industrial programmable device (2) is adapted to :
- read a first user identifier from a user identification device, and
- check whether said first user identifier belongs to a list of user identifiers previously stored in a memory of said industrial programmable device,
- in case of negative checking, maintain the communication module of said industrial programmable device disabled,
- the portable programmable device (4) is adapted to :
- read a second user identifier from a user identification device, and
- check whether said second user identifier belongs to a list of user identifiers previously stored in a memory of said portable programmable device,
- in case of negative checking, maintain the communication module of said portable programmable device disabled,
the industrial programmable device (2) further comprising a module (14) adapted to verify whether said first user identifier is identical to said second user identifier, and in case of negative verification, to disable the communication module (6) of said industrial programmable device (2) and/or to disable the communication module (30) of said portable programmable device (2).

13. System for securing electronic data exchange according to claim 12, wherein said industrial programmable device (2) comprises an integrated user identification reader adapted to receive a user identification card and/or said portable programmable device (4) comprises an integrated user identification reader adapted to receive a user identification card.

14. System for securing electronic data exchange according to claim 12, wherein said industrial programmable device (2) comprises a second communication module (18) adapted to communicate with an external user identification device (20) via a second communication protocol, and/or said portable programmable device (4) comprises a second communication module adapted to communicate with an external user identifier reading device via a second communication protocol, the second communication protocol being different from the first communication protocol.
